Europäisches Patentamt

European Patent Office

Office européen des brevets

(19)

(11) Numéro de publication: **0 146 433**
**B1**

(12) **FASCICULE DE BREVET EUROPEEN**

(45) Date de publication du fascicule du brevet:
15.07.87

(51) Int. Cl.⁴: **B 64 G 1/44,** B 23 K 20/18,
B 23 K 20/20

(21) Numéro de dépôt: **84402240.0**

(22) Date de dépôt: **07.11.84**

(54) Procédé d'assemblage provisoire par soudage de plaquettes pelables pour dispositif de libération mécanique par pelage.

(30) Priorité: **09.11.83  FR 8317800**

(43) Date de publication de la demande:
**26.06.85 Bulletin 85/26**

(45) Mention de la délivrance du brevet:
**15.07.87 Bulletin 87/29**

(84) Etats contractants désignés:
**BE CH DE GB IT LI NL SE**

(56) Documents cités:
**EP - A - 0 059 673**

(73) Titulaire: **SOCIETE NATIONALE INDUSTRIELLE
AEROSPATIALE Société dite:, 37 Boulevard de
Montmorency, F-75781 Paris Cedex 16 (FR)**

(72) Inventeur: **Philipoussi, Jean-Pierre, Les Collines de
Capitou Boulevard Jeanne d'Arc, F-06210 Mandelieu
(FR)**

(74) Mandataire: **Rinuy, Santarelli, 14, avenue de la Grande
Armée, F-75017 Paris (FR)**

ACTORUM AG

**Description**

La présente invention concerne la préparation d'un dispositif de libération mécanique du type décrit notamment dans la demande de brevet européen EP-A-0 059 673, au nom de la Demanderesse et porte plus précisément sur un procédé d'assemblage provisoire par soudure des plaquettes pelables que comporte ce dernier, ainsi que sur les ensembles ainsi obtenus.

Le document européen EP-A-0 059 673 a trait à la libération mécanique de deux éléments assujettis provisoirement bord à bord l'un à l'autre, notamment dans les conditions sévères de vide et de température associées à une ambiance spatiale. Il concerne en particulier l'ouverture dans l'espace de conteneurs contenant des organes, tels que des panneaux solaires, qui sont déployés après mise sur orbite d'un véhicule porteur tel que satellite. Il propose un dispositif de libération mécanique de deux parties assujetties provisoirement bord à bord l'une à l'autre, qui comporte un élément liant disposé sur chaque bordure desdites parties, un élément flexible de jonction appliqué sur les éléments liants, et un élément permettant, sous l'action d'un mécanisme, le soulèvement progressif automatique dudit élément flexible, l'agencement desdits éléments étant tel que, dès la mise en action dudit mécanisme, l'élément flexible produise un pelage des éléments liants occasionnant de la sorte la libération complète des parties assujetties provisoirement dès lors que l'élément flexible se trouve totalement détaché.

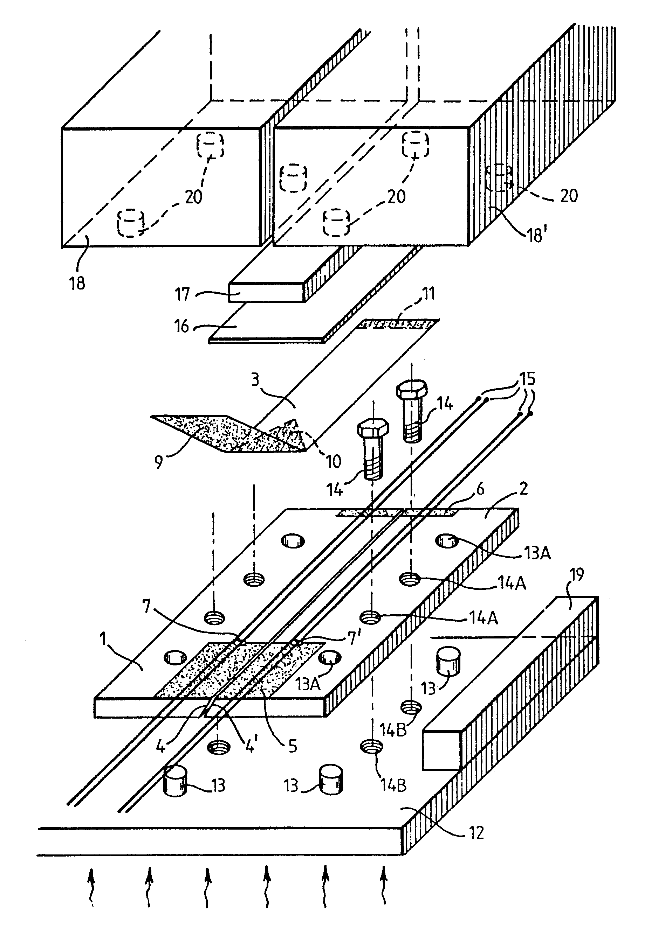

A titre d'illustration, la figure 4 du document européen EP-A-0 059 673 représente deux parois disposées bord à bord, auxquelles sont respectivement fixées, également bord à bord, deux plaquettes coiffées conjointement par une lame ou élément flexible qui leur est rapporté par un élément liant. Dans l'exemple considéré c'est un câble relié à la lame qui assure un pelage des plaquettes et donc une libération mécanique desdites parois.

L'assujettissement provisoire de ces parois est obtenu par fixation sur ces dernières d'ensembles (plaquettes-liant-élément flexible) préalablement formés.

C'est l'assemblage provisoire par soudage de tels ensembles que concerne la présente invention.

La préparation se tels ensembles (plaquettes-soudure-élément flexible) exige un soin particulier dans le choix des matériaux et dans leur mise en œuvre en vue d'assurer l'obtention des caractéristiques requises, notamment:

— une bonne transmission des contraintes de cisaillement qui peuvent apparaître à la jonction des parois en configuration d'assujettissement, lesquelles peuvent atteindre 2000N/cm; et

— une libération franche et facile des plaquettes par arrachement de l'élément flexible, aussi appelé clinquant couvre-joint, sous l'effet d'une traction appliquée, soit à l'extrémité dudit élément flexible, soit sur une moyen de soulèvement tel que rouleau ou couteau, ainsi que le propose le document européen EP-A-0 059 673; l'effort de traction est de préférence de l'ordre d'une dizaine de Newtons au plus.

Comme on peut le comprendre, il est nécessaire que les caractéristiques mécaniques de ces ensembles soient suffisamment répétitives pour qu'ils puissent être associés en série de manière à pouvoir être actionnés en une seule fois. De même, il est nécessaire d'obtenir une faible dispersion dans les efforts nécessaires pour produire le pelage de manière à ne pas conduire à un surdimensionnement du mécanisme de commande du dispositif de libération.

L'invention a donc pour objet un procédé de fabrication facilement reproductible grâce, notamment, à une bonne maîtrise des problèmes de capillarité de la soudure lorsqu'elle est encore à l'état liquide.

La présente invention propose un procédé d'assemblage provisoire par soudage de plaquettes pelables par l'intermédiaire d'une matière de soudure et d'un élément flexible de jonction destinées à faire partie d'un dispositif de libération mécanique de deux pièces provisoirement assujetties bord à bord l'une à l'autre dans lequel ces plaquettes sont adaptées à être respectivement rapportées côte à côte sur des bords adjacents desdites pièces, la matière de soudure est disposée sur les plaquettes et l'élément flexible de jonction est appliqué sur ladite matière de soudure, et dans lequel un élément est prévu pour, sous l'action d'un mécanisme, provoquer un soulèvement progressif automatique dudit élément flexible, l'agencement de ces moyens étant tel que dès la mise en action du mécanisme, l'élément flexible produise un pelage de la matière de soudure occasionnant de la sorte une libération complète des pièces assujetties provisoirement dès lors que l'élément flexible se trouve totalement détaché, ce procédé étant caractérisé par l'aménagement sur les plaquettes et l'élément flexible de jonction de réserves ne présentant aucune adhérence vis à vis de la soudure par la mise en charge de la matière de soudure pour la répartir entre plaquettes et élément flexible lorsqu'elle est en fusion, et par l'aménagement dans les plaquettes de pièges visent à éliminer tout surplus de soudure.

L'invention concerne également les ensembles plaquettes-élément flexible ainsi soudés, qui sont adaptés à assujettir provisoirement deux éléments liés bord à bord dans le cadre d'un dispositif de libération mécanique tel que décrit notamment par le document européen EP-A-0 059 673.

La description qui suit est donnée à titre d'exemple non limitatif, en regard du dessin annexé sur lequel la figure unique est une vue en perspective des éléments intervenant pour la mise en œuvre d'un procédé selon l'invention.

La figure unique représente deux plaquettes 1 et 2, qu'il convient d'assenbler provisoirement bord à bord l'une à l'autre par un élément flexible ou clinquant 3, au moyen d'une soudure 15 répartie uniformément sur toute la surface d'assemblage desdites plaquettes avec ledit clinquant.

Avant l'assemblage des pièces 1, 2 et 3 par soudure, il est nécessaire de préparer leur surface pour obtenir l'adhésion désirée tout en évitant des bourrelets dont les irrégularités pourraient conduire ultérieurement à une dispersion sensible sur l'effort de pelage.

Les pièces 1, 2 et 3, sont préparées comme suit:

— de façon classique avant chaque opération, pour que la soudure présente des caractéristiques fidèles, il est nécessaire de procéder à un traitement de surface (dégraissage, ponçage); puis

— les zones de contact avec la sodure sont délimitées par des réserves (représentées en gris) obtenues par un dépôt ne permettant pas l'adhérence de la soudure même à chaud. Un tel dépôt est, par exemple, à base d'une combinaison d'oxydes de zinc, nickel et molybdène, appelé aussi «noir de nickel», a base de chromage «DALIC»®, ou autre équivalent.

Ce dépôt est effectué notamment sur les tranches en regard 4 et 4' des plaquettes 1 et 2 et également face aux extrémités du clinquant (5 et 6). Il est à noter que les tranches 4 et 4' des plaquettes sont avantageusement inclinées. Chaque plaquette comporte en outre au moins un piège (7 et 7') destiné à absorber un éventuel surplus de soudure; dans l'exemple représenté, ces pièges consistent en un orifice circulaire situé à cheval sur la limite de la réserve 5 située du côté relevé 9 du clinquant. Ledit orifice n'est pas recouvert de «noir de nickel» de manière que la capillarité de la soudure lui permette de s'y écouler.

La préparation du clinquant 3 comporte également l'aménagement de réserves au noir de nickel: l'une située sur ledit côté relevé 9 ou languette de pelage, se prolonge sur une zone triangulaire 10 dont le sommet est situé sur la zone de vis à vis des plaquettes de manière à faciliter ultérieurement l'amorçage du pelage; à l'autre extrémité du clinquant, une petite bande 11 est neutralisée pour s'assurer qu'il n'y aura pas de résistance supplémentaires en fin de course du pelage, puisque, de cette manière, on élimine le risque de formation d'un bourrelet de soudure.

L'opération de soudure se fait en portant au-delà de la température de fusion de la soudure 15 un ensemble constitué par:

— les deux plaquettes 1 et 2 préparées comme il a été dit plus haut, fixées sur un support 12 qui détermine leur position relative au moyen de pions 13 de positionnement et de vis de bridage 14; des alésages 13A et 14A sont ménagés dans les plaquettes tandis que ledit support comporte des trous taraudés 14B;

— des brins calibrés de soudure 15, disposés régulièrement, parallèlement à l'axe du plan d'affrontement des tranches des plaquettes, et

— le clinquant préformé 3 et préparé comme il a été dit plus haut.

Les dits éléments 1, 2 et 3 constituent, après fusion de la soudure 15, un ensemble (plaquettes - soudure - clinquant) prêt à être mis en œuvre pour un assujettissement de deux parois (non représentées).

L'opération de soudage proprement dite est conduite comme suit:

— le support de bridage 12 des plaquettes est chauffé par sa face inférieure; ledit support est recouvert, sur sa face supérieure, de noir de nickel pour éviter tout risque de soudure parasite des plaquettes sur celui-ci;

— une plaquette d'isolation thermique 16 est placée sur le clinquant;

— une plaquette métallique 17 est disposée au-dessus de ladite plaquette pour la répartition des charges entre les deux bords du clinquant; et

— deux poids 18 et 18' sont disposés sur cette plaquette métallique de manière à s'appuyer chacun par moitié sur un bord de la plaquette de répartition.

Lorsque l'on fabrique simultanément plusieurs ensembles plaquettes-clinquant, il est avantageux de les monter côte à côte, ce qui permet de faire porter chaque poids 18 ou 18' sur deux moitiés adjacentes d'ensembles consécutifs. Ces poids sont avantageusement munis de pions 20, au nombre de trois dans l'exemple représenté (deux d'un côté, un de l'autre), de manière à définir un polygone de sustentation identique pour tous les poids. En bordure, on utilise une cale 19.

L'intérêt de ces dispositions est d'assurer une bonne répartition des charges. En effet, si chaque poids portait individuellement sur un seul ensemble, l'équilibre individuel entre les deux côtés ne serait pas aussi bien assuré et il y aurait un risque d'avoir une épaisseur inégale de soudure entre les deux côtés, et donc des problèmes de tenue et de pelage des ensembles ainsi constitués.

De la sorte, selon l'invention, la quantité de soudure 15 est contrôlée par l'emploi de fils calibrés, dont le nombre est choisi pour produire l'épaisseur nécessaire. D'autre part, les zones de soudure sont limitées par des réserves 5, 6, 9 à 11 ayant subi un traitement de surface sur lequel la soudure n'a pas pris. Ensuite, une pression constante suffisante, mais faible, est appliqué sur les surfaces en présence pour assurer une bonne répartition de la soudure, sans cependant risquer de la chasser du domaine délimité précédemment, des dégagements ou pièges 7, 7' permettant d'évacuer un surplus éventuel de soudure. Il est à noter que la qualité du calibrage des fils 15 n'est pas critique compte tenu de la présence des pièges 7 et 7'. Il suffit d'ajuster le nombre de ces pièges en fonction de la précision du calibrage des fils utilisés. D'autre formes d'apport de soudure peuvent être employées.

De façon avantageuse, un ensemble (plaquettes - soudure - clinquant) selon l'invention est obtenu comme suit:

— Plaquettes: cupro-béryllium
— Clinquant: cupro-béryllium revenu
— Soudure: Sn 62% - Pb 36% - Ag 2% (T fusion = 178°C)
— Température de chauffe: 228°C
— Pression sur la soudure: 100 g/cm$^2$.

**Revendications**

1. Procédé d'assemblage provisoire per soudage de plaquettes pelables (1, 2) par l'intermédiaire d'une matière de soudure (15) et d'un élément flexible de jonction (3), destinées à faire partie d'un dispositif de libération mécanique de deux pièces provisoirement assujetties bord à bord l'une à l'autre dans lequel ces plaquettes (1, 2) sont adaptées à être respectivement rapportées côte à côte sur des bords adjacents desdites pièces, la matière de soudure (15) est disposée sur les plaquettes (1, 2) et l'élément flexible de jonction (3) est appliqué sur ladite matière de soudure (15), et dans lequel un élément est prévu pour, sous l'action d'un mécanisme, provoquer un soulèvement progressif automatique dudit élément flexible (3), l'agencement de ces moyens étant tel que dès la mise en action du mécanisme, l'élément flexible (3) produise un pelage de la matière de soudure (15) occasionnant de la sorte une libération complète des pièces assujetties provisoirement dès lors que l'élément flexible (3) se trouve totalement détaché, ce procédé étant caractérisé par l'aménagement sue les plaquettes (1, 2) et l'élément flexible de jonction (3) de réserves (5, 6, 9, 10, 11) ne présentant aucune adhérence vis à vis de la soudure (15), par la mise en charge de la matière de soudure (15) pour la répartir entre plaquettes et élément flexible lorsqu'elle est en fusion, et par l'aménagement dans les plaquettes de pièges (7, 7') visant à éliminer tout surplus de soudure (15).

2. Procédé selon la revendication 1, selon lequel on apporte la matière de soudure (15) sous la forme de fils de soudure calibrés disposés parallèlement au plan d'affrontement des plaquettes (1, 2).

3. Procédé selon la revendication 1 ou la revendication 2, caractérisé en ce que lesdites réserves (5, 6, 9, 10, 11) sont obtenues par dépôt d'une composition d'oxydes de zinc, de nickel et de molybdène, dite «noir de nickel».

4. Procédé selon l'une quelconque des revendications 1 à 3, caractérisé en ce que des réserves sont prevues aussi sur les tranches affrontées (4, 4') desdites plaquettes (1, 2).

5. Procédé selon l'une quelconque des revendications 1 à 4, caractérisé en ce que des réserves (9, 11) sont ménagées au niveau des extrémités de l'élément de jonction (3).

6. Procédé selon la revendication 5, caractérisé en ce que l'une des réserves (10) ménagée au niveau de l'extrémité d'amorçage de pelage de l'élément flexible de jonction (3) a une forme triangulaire dont une pointe est dirigée vers l'extrémité opposée dudit élément flexible de jonction (3).

7. Procédé selon l'une quelconque des revendications 1 à 6, caractérisé en ce que certains au moins des pièges (7, 7') sont ménagés à la lisière de certaines réserves (5).

8. Procédé selon l'une quelconque des revendications précédentes, caractérisé en ce que la mise en charge de la soudure (15) en fusion est assurée par deux poids (18, 18') côte à côte s'appuyant sur l'élément flexible de jonction (3) au travers d'une plaquette métallique (17) de répartition de charge.

9. Procédé selon la revendication 8, caractérisé en ce que plusieurs paires de plaquettes (1, 2) adjacentes sont assujetties provisoirement par soudage, deux plaquettes adjacentes appartenant à des paires différentes étant mises en charge par un même poids (18, 18').

## Patentansprüche

1. Verfahren zum provisorischen Verbinden durch Schweissen von schälbaren Gurten (1, 2) mittels eines Schweissmaterials (15) und eines flexiblen Verbindungselements (3), die dazu bestimmt sind, Teil einer mechanischen Freigabevorrichtung zu sein, die aus zwei dicht nebeneinander provisorisch miteinander verbundenen Teilen besteht, bei der die Gurte (1, 2) so eingerichtet sind, dass sie jeweils nebeneinander auf die benachbarten Kanten der Teile aufgesetzt werden, wobei das Schweissmaterial (15) auf den Gurten (1, 2) angeordnet und das flexible Verbindungselement (3) auf das Schweissmaterial (15) aufgebracht wird, und bei dem ein Element vorgesehen ist, um unter Einwirkung eines Mechanismus' ein automatisches, fortschreitendes Abheben des flexiblen Elements (3) zu bewirken, wobei die Anordnung der Mittel derart ist, dass nach dem Wirksamwerden des Mechanimus' das flexible Element (3) ein Abschälen des Schweissmaterials (15) bewirkt, welches so eine vollständige Freigabe der provisorisch miteinander verbundenen Teile herbeiführt, infolgedessen das flexible Element (3) vollständig abgelöst ist, wobei das Verfahren gekennzeichnet ist durch die Einrichtungvon geschützten Bereichen (5, 6, 9, 10, 11) auf den Gurten (1, 2) und dem flexiblen Verbindungselement (3), die keine Haftfähigkeit gegenüber der Schweissung (15) aufweisen, durch das unter Belastungsetzen des Schweissmaterials (15), um dieses zwischen Gurten und flexiblem Verbindungselement zu verteilen, wenn es geschmolzen ist, und durch das Anordnen von Fallen (7, 7') in den Gurten, die dazu dienen, jeglichen Überschuss von Schweissmaterial (15) zu vermeiden.

2. Verfahren nach Anspruch 1, nach dem man das Schweissmaterial (15) in Form von parallel auf den Stirnflächen der Gurte (1, 2) angeordneten kalibrierten Schweissfäden aufbringt.

3. Verfahren nach Anspruch 1 oder 2, dadurch gekennzeichnet, dass die geschützten Bereiche (5, 6, 9, 10, 11) durch das Aufbringen einer Mischung von Zink-, Nickel- und Molybdänoxiden, genannt «Nickelschwarz», erhalten werden.

4. Verfahren nach einem der Ansprüche 1 bis 3, dadurch gekennzeichnet, dass geschützte Bereiche auch auf den sich gegenüberliegenden Abschnitten (4, 4') der Gurte (1, 2) vorgesehen sind.

5. Verfahren nach einem der Ansprüche 1 bis 4, dadurch gekennzeichnet, dass geschützte Bereiche (9, 11) in Höhe der Enden des Verbindungselements (3) angebracht sind.

6. Verfahren nach Anspruch 5, dadurch gekennzeichnet, dass einer der Bereiche (10), der in Höhe des Endes, an dem die Abschälung des flexiblen Verbindungselements (3) einsetzt, angebracht ist, eine Dreiecksform besitzt, deren eine Spitze in Richtung des entgegengesetzten Endes des flexiblen Verbindungselements (3) gerichtet ist.

7. Verfahren nach einem der Ansprüche 1 bis 6, dadurch gekennzeichnet, dass wenigstens einige der Fallen (7, 7') am Rand bestimmter geschützter Bereiche (5) angebracht sind.

8. Verfahren nach einem der vorhergehenden Ansprüche, dadurch gekennzeichnet, dass zwei Gewichte (18, 18'), die nebeneinander über einen metallischen Lastverteilungsgurt (17) auf das flexible Verbindungselement (3) drücken, gewährleisten, dass das geschmolzene Schweissmaterial belastet ist.

9. Verfahren nach Anspruch 8, dadurch gekennzeichnet, dass mehrere benachbarte Paare von Gurten (1, 2) provisorisch durch Schweissen verbunden werden, wobei zwei benachbarte Gurte, die unterschiedlichen Paaren angehören, durch ein und dasselbe Gewicht (18, 18') unter Last gesetzt werden.

**Claims**

1. Process for provisionally welding strippable boards (1, 2) by means of a welding material (15) and a flexible joint element (3) which are intended to form part of a device for the mechanical release of two components provisionally secured to one another edge to edge, in which process these boards (1, 2) are arranged to be respectively attached side by side to adjacent edges of the said components, the welding material (15) is arranged on the boards (1, 2) and the flexible joint element (3) is laid onto the said welding material (15), and in which process there is an element intended, under the action of a mechanism, to cause an automatic progressive lifting of the said flexible element (3), the arrangement of these means being such that, as soon as the mechanismus is actuated, the flexible element (3) causes the welding material 615) to be stripped off, thus resulting in a complete release of the provisionally secured components as soon as the flexible element (3) is fully detached, the process being characterised in that resists (5, 6, 9, 10, 11) having no adhesion relative to the welding material (15) are arranged on the boards (1, 2) and the flexible joint element (3), in that the welding material (15) is put under load in order to distribute it between the boards and the flexible element when it is in the molten state, and in that traps (7, 7') aimed at eliminating any excess welding material (15) are provided in the boards.

2. Process according to Claim 1, according to which the welding material (15) is supplied in the form of calibrated strands of solder arranged parallel to the butting plane of the boards (1, 2).

3. Process according to Claim 1 or Claim 2, characterised in that the said resists (5, 6, 9, 10, 11) are obtained by depositing a composition of oxides of zinc, of nickel and of molybdenum, called «nickel black».

4. Process according to any one of Claims 1 to 3, characterised in that resists are also provided on the butting faces (4, 4') of the said boards (1, 2).

5. Process according to any one of Claims 1 to 4, characterised in that resists (9, 11) are provided in the region of the ends of the joint element (3).

6. Process according to Claim 5, characterised in that one of the resists (10), which is provided in the region of the end where the flexible joint element (3) begins to be stripped off, has a triangular shape, one point of which is directed towards the opposite end of the said flexible joint element (3).

7. Process according to any one of Claims 1 to 6, characterised in that at least some of the traps (7, 7') are located at the border of certain resists (5).
Process according to any one of the preceding claims, characterised in that the molten welding material (15) is put under load by two weights (18, 18') placed side by side and bearing on the flexible joint element (3) via a metal load-distribution plate (17).

9. Process according to Claim 8, characterised in that several pairs of adjacent boards (1, 2) are provisionally secured by means of welding, and two adjacent boards belonging to different pairs are put under load by one and the same weight (18, 18').